# EUROPEAN PATENT APPLICATION

(11) **EP 4 645 561 A1**
(43) Date of publication of application: **05.11.2025**
(21) Application number: 23909163.0
(22) Date of filing: 02.08.2023
(51) Int. Cl.: H01M 50/342, H01M 50/103, H01M 50/682

(54) **BATTERY CELL AND ELECTRIC DEVICE**

(30) Priority: 31.12.2022 CN 202211737110
(71) Applicant: Ningde Amperex Technology Limited, Ningde, Fujian 352100 (CN)
(72) Inventor: ZHANG, Guowen, Ningde, Fujian 352100 (CN)
(74) Representative: Icosa
(86) International application number: PCT/CN2023/110830
(87) International publication number: WO 2024/139221

(57) **Abstract**

An embodiment of this application provides a battery cell and an electrical device, and relates to the field of battery technology. The battery cell includes a housing, an electrode post, and a pressure relief mechanism. The housing includes a bottom wall and a plurality of sidewalls disposed around the bottom wall. A first through-hole and a second through-hole are created on a first sidewall of the plurality of sidewalls. The electrode post is threaded through the first through-hole. A pressure relief mechanism covers the second through-hole. The pressure relief mechanism includes an adhesive film. The adhesive film is able to melt when a temperature of the battery cell reaches a threshold, so as to release pressure inside the housing through the second through-hole. The thermal sensitivity of the pressure relief mechanism is relatively high, thereby achieving relatively high reliability of pressure relief and improving safety of the battery cell. Both the second through-hole and the first through-hole in which the electrode post is mounted are located on the first sidewall, so that the pressure relief mechanism can reuse a space reserved for the electrode post. This saves the space of the electrical device equipped with the battery cell, makes the structure of the electrical device more compact, and reduces the manufacturing cost of the pressure relief mechanism.

## Description

### CROSS-REFERENCE TO RELATED APPLICATIONS

This application claims priority to Chinese Patent Application No. 202211737110.7, filed on December 31, 2022 and entitled "BATTERY CELL AND ELECTRICAL DEVICE", which is incorporated herein by reference in its entirety.

### TECHNICAL FIELD

This application relates to the field of battery technology, and in particular, to a battery cell and an electrical device.

### BACKGROUND

With the rapid development of new energy technology, batteries have been widely used in the fields such as electronic devices, electric vehicles, electric two-wheelers, and electric tools. The requirements on quality, safety, and miniaturization of batteries are increasingly higher.

Currently, in order to improve safety of a steel-shell battery, a notch is created by laser on a cover of the steel shell to relieve pressure in a case of excessive gas pressure inside a battery cell. A relatively large valve space corresponding to the notch needs to be reserved on an electrical device equipped with the steel-shell battery cell, thereby increasing the overall space to be occupied by the electrical device. In addition, the thermal sensitivity of the notch is relatively poor, thereby resulting in low reliability of pressure relief and impairing safety of the battery cell. Moreover, the laser notching increases the manufacturing cost of the battery cell.

### SUMMARY

An objective of some embodiments of this application is to provide a battery cell and an electrical device. The battery cell provided in an embodiment of this application can improve the reliability of pressure relief of the battery cell and improve space utilization of the electronic device.

This application is implemented through the following technical solutions:

According to a first aspect, an embodiment of this application provides a battery cell, including:
a housing, including a bottom wall and a plurality of sidewalls disposed around the bottom wall, where a first through-hole and a second through-hole are created on a first sidewall of the plurality of sidewalls;
an electrode post, threaded through the first through-hole; and
a pressure relief mechanism, covering the second through-hole, where
the pressure relief mechanism includes a adhesive film, and the adhesive film is able to melt when a temperature of the battery cell reaches a threshold, so as to release pressure inside the housing through the second through-hole.

**In** the above technical solution, a pressure relief mechanism containing a adhesive film is disposed and covers the second through-hole of the housing. In this way, the adhesive film can melt when the temperature of the battery cell reaches a threshold, so that the pressure in the housing is released through the second through-hole. The thermal sensitivity of the pressure relief mechanism is relatively high, thereby achieving relatively high reliability of pressure relief and improving safety of the battery cell. Both the second through-hole and the first through-hole in which the electrode post is mounted are located on the first sidewall, so that the pressure relief mechanism can reuse the space reserved for the electrode post. This saves the space of the electrical device equipped with the battery cell, makes the structure of the electrical device more compact, and reduces the manufacturing cost of the pressure relief mechanism.

**In** some embodiments, the battery cell further includes a first insulator. The first insulator is located inside the first sidewall. The first insulator is connected to the electrode post. A channel connecting an inner space of the housing and the pressure relief mechanism is created on the first insulator.

In the above technical solution, a channel connecting the internal space of the housing and the pressure relief mechanism is created on the first insulator, so that the second through-hole is not prone to be jammed during pressure relief, and the pressure relief of the battery cell is more effective and safer.

In some embodiments, the channel is a groove created on a side of the first insulator, the side being oriented toward the first sidewall. At least one end of the groove extends to an edge of the first insulator.

In the above technical solution, the channel is a groove created on a side of the first insulator, the side being oriented toward the first sidewall. In this way, the distance between the second through-hole and the channel is shorter, thereby further reducing the possibility of jamming the channel, and making the pressure relief of the battery cell more effective and safer.

In some embodiments, the channel runs through the first insulator along a width direction of the first insulator.

In the above technical solution, the air on both sides of the first insulator along the width direction of the first insulator is enabled to flow to the second through-hole through the channel. The flow rate of the air during the pressure relief is faster, and the pressure relief can still be implemented when the channel is jammed on any side of the first insulator along the width direction of the first insulator, thereby improving the reliability of the pressure relief of the battery cell.

In some embodiments, a depth of the channel is A, satisfying: 0.05 mm ≤ A ≤ 0.5 mm.

In the above technical solution, the depth A of the channel is set to a value ranging from 0.05 mm to 0.5 mm, thereby increasing the cross-sectional area of the channel without causing the first insulator to occupy too much space inside the housing, and in turn, increasing the speed of pressure relief. If the value of A is relatively small (for example, less than 0.05 mm), the cross-sectional area of the channel is relatively small, the channel is prone to be jammed, and the speed of pressure relief is overly low and impairs the safety of pressure relief. If the value of A is relatively large (for example, larger than 0.5 mm), the first insulator will be oversized and occupy much space inside the housing, thereby reducing the space available for mounting other components in the housing.

In some embodiments, the depth satisfies: 0.1 mm ≤ A ≤ 0.2 mm.

In the above technical solution, the depth A of the channel is set to a value ranging from 0.1 mm to 0.2 mm, thereby further increasing the cross-sectional area of the channel without occupying too much space inside the housing.

In some embodiments, a diameter of the second through-hole is B, and a width of the channel is C, satisfying: 0.8 × B ≤ C.

In the above technical solution, C is set to a value greater than or equal to 0.8×B, thereby achieving a relatively large passage area between the channel and the second through-hole, and increasing the pressure relief speed. If C is relatively small (for example, less than 0.8×B), the passage area between the channel and the second through-hole is relatively small, the channel is prone to jamming, and the speed of pressure relief is overly low, thereby impairing the safety of pressure relief.

In some embodiments, B ≤ C ≤ 2 × B.

In the above technical solution, C is set to a value ranging from B to 2×B, thereby further achieving a relatively large passage area between the channel and the second through-hole.

In some embodiments, the battery cell further includes an electrode assembly and an interconnect component. Both the electrode assembly and the interconnect component are disposed in the housing. The interconnect component is configured to electrically connect the electrode assembly and the electrode post, and the first insulator is located between the first sidewall and the interconnect component.

A third through-hole is created in the first insulator, and a fourth through-hole is created in the interconnect component. The electrode post is threaded through the third through-hole and the fourth through-hole and riveted to the interconnect component.

In the above technical solution, the electrode post is threaded through the first insulator and the interconnect component and riveted to the interconnect component, thereby making the connection between the electrode post and the interconnect component more stable. In addition, the first insulator is able to play a role of dielectrically isolating the interconnect component from the housing.

In some embodiments, the battery cell further includes a second insulator. At least a part of the second insulator is located outside the first sidewall. A fifth through-hole is created in the second insulator. The electrode post is threaded through the fifth through-hole.

In the above technical solution, the electrode post is threaded through the second insulator, so that the second insulator can play a role of dielectrically isolating the electrode post from the housing.

In some embodiments, the adhesive film includes a first adhesive segment and a second adhesive segment connected to each other. The first adhesive segment is located outside the first sidewall. At least a part of the second adhesive segment is located in the second through-hole. The first adhesive segment is larger than the second adhesive segment in size.

In the above technical solution, the adhesive film is divided into a first adhesive segment and a second adhesive segment, and at least a part of the second adhesive segment is located in the second through-hole. In this way, the first adhesive segment can be bonded to the housing, and the second adhesive segment can seal off the second through-hole, thereby improving the effect of sealing the second through-hole.

In some embodiments, the adhesive film further includes a third adhesive segment connected to the second adhesive segment at a side away from the first adhesive segment. The third adhesive segment is located inside the first sidewall.

In the above technical solution, the adhesive film is divided into three adhesive segments, the third adhesive segment is located inside the first sidewall, and the third adhesive segment is larger than the second adhesive segment in size, thereby fixing the adhesive film to the housing more firmly, making the adhesive film not prone to fall off, and in turn, improving the reliability of sealing the second through-hole.

In some embodiments, a melting point of the adhesive film is T, satisfying: 100 °C ≤ T ≤ 190 °C.

In the above technical solution, the melting point T of the adhesive film is set to a value ranging from 100 °C to 190 °C. Therefore, the adhesive film can melt to release the pressure inside the housing when the battery cell is thermally runaway. If the value of T is relatively small (for example, less than 100 °C), the adhesive film may melt before the battery cell is thermally runaway, and the reliability of sealing the second through-hole by the adhesive film is relatively low. If the value of T is relatively large (for example, larger than 190 °C), the adhesive film is hardly meltable when the battery cell is thermally runaway, and the sensitivity of the battery cell in pressure relief is relatively low.

In some embodiments, the melting point satisfies: 100 °C ≤ T ≤ 130 °C.

In the above technical solution, the melting point T of the adhesive film is set to a value ranging from 100 °C to 130 °C, thereby making the control more accurate in a case of thermal runaway of the battery cell.

In some embodiments, a thickness of the adhesive film is H, satisfying: 0.05 mm ≤ H ≤ 0.5 mm.

In the above technical solution, the thickness H of the adhesive film is set to a value ranging from 0.05 mm to 0.5 mm, thereby making the adhesive film not easily breakable and not easily permeable to water, and achieving a good effect of pressure relief. If the value of H is relatively small (for example, less than 0.05 mm, the adhesive film is easily breakable and overly permeable to water. If the value of H is relatively large (for example, larger than 0.5 mm), the adhesive film is hardly meltable when the battery cell is thermally runaway, and the sensitivity of the battery cell in pressure release is relatively low.

In some embodiments, the thickness satisfies: 0.1 mm ≤ H ≤ 0.3 mm.

In the above technical solution, the thickness H of the adhesive film is set to a value ranging from 0.1 mm to 0.3 mm, thereby making the control more accurate in a case of thermal runaway of the battery cell.

In some embodiments, the second through-hole is in a circular shape, and a diameter of the second through-hole is B, satisfying: 0.5 mm ≤ B ≤ 3 mm.

In the above technical solution, the diameter B of the second through-hole is set to a value ranging from 0.5 mm to 3 mm. In this way, when the battery cell is thermally runaway, the second through-hole can provide a pressure relief channel that possesses a relatively large cross-sectional area. In addition, such a setting makes it convenient to mount the pressure relief mechanism. A relatively small value of B (for example, less than 0.5 mm) leads to a relatively small cross-sectional area of the pressure relief channel formed by melting the adhesive film when the battery cell is thermally runaway, the gas inside the housing may fail to be released in time, and the pressure relief safety of the battery cell is relatively low. When the value of B is relatively large (for example, larger than 3 mm), the pressure relief mechanism with a relatively large area is required to cover the second through-hole, thereby making it difficult to mount the pressure relief mechanism.

In some embodiments, the diameter satisfies: 0.9 mm ≤ B ≤ 1.6 mm.

In the above technical solution, the diameter B of the second through-hole is set to a value ranging from 0.9 mm to 1.6 mm, thereby further providing a pressure relief channel that possesses a relatively large cross-sectional area, and making it convenient to mount the pressure relief mechanism.

In some embodiments, a width of the pressure relief mechanism at a part bonded to the first sidewall is W, satisfying: 0.2 mm ≤ W ≤ 2 mm.

In the above technical solution, the width W of the adhesive film at the part bonded to the first sidewall is set to a value ranging from 0.2 mm to 2 mm, thereby shortening a pressure relief path when the battery cell is thermally runaway, achieving a relatively high sensitivity of the battery cell in pressure relief, and making the adhesive film more reliable in sealing the second through-hole. If the value of W is relatively small (for example, less than 0.2 mm), the adhesive film will be less reliable in sealing the second through-hole. If the value of W is relatively large (for example, larger than 2 mm), the pressure relief path will be longer, and the sensitivity of the battery cell in pressure relief will be lower.

In some embodiments, the width satisfies: 0.3 mm ≤ W ≤ 1 mm.

In the above technical solution, the width W of the adhesive film at the part bonded to the first sidewall is set to a value ranging from 0.3 mm to 1 mm, and therefore, the pressure relief path is shorter when the battery cell is thermally runaway, and the sensitivity of the battery cell in pressure relief is higher.

In some embodiments, the pressure relief mechanism further includes a metal sheet. The metal sheet and the adhesive film are stacked, and the metal sheet is located on a side of the adhesive film, the side being oriented back from the first sidewall.

In the above technical solution, a metal sheet is disposed on a side of the adhesive film, the side being oriented back from the housing, thereby reducing the water seepage area of the adhesive film, and improving the sealing effect.

According to a second aspect, an embodiment of this application provides an electrical device. The electrical device includes the battery cell disclosed above, and the battery cell is configured to provide electrical energy.

### BRIEF DESCRIPTION OF DRAWINGS

To describe technical solutions in some embodiments of this application more clearly, the following outlines the drawings to be used in the embodiments. Understandably, the following drawings show merely some embodiments of this application, and therefore, are not intended to limit the scope. A person of ordinary skill in the art may derive other related drawings from the drawings without making any creative efforts.
FIG. 1 is a schematic top view of a partial structure of an electrical device according to some embodiments of this application;
FIG. 2 is a three-dimensional schematic structural diagram of a battery cell according to some embodiments of this application;
FIG. 3 is a schematic structural exploded view of a battery cell according to some embodiments of this application;
FIG. 4 is a schematic cross-sectional view of a partial structure of a battery cell according to some embodiments of this application;
FIG. 5 is a schematic structural front view of an adhesive film according to some embodiments of this application;
FIG. 6 is a schematic structural exploded view of a battery cell according to some embodiments of this application;
FIG. 7 is a schematic structural exploded view of a battery cell according to some embodiments of this application;
FIG. 8 is a three-dimensional schematic structural diagram of a battery cell according to some embodiments of this application;
FIG. 9 is a schematic structural exploded view of a battery cell according to some embodiments of this application;
FIG. 10 is a schematic structural top view of a first insulator according to some embodiments of this application;
FIG. 11 is a schematic structural front view of a first insulator according to some embodiments of this application;
FIG. 12 is a schematic structural front view of a battery cell according to some embodiments of this application;
FIG. 13 is a schematic structural bottom view of a battery cell according to some embodiments of this application;
FIG. 14 is a schematic structural cross-sectional view of FIG. 13 sectioned along an X1-X1 line;
FIG. 15 is a schematic structural cross-sectional view of FIG. 13 sectioned along an X2-X2 line;
FIG. 16 is a schematic cross-sectional view of a partial structure of a battery cell according to some embodiments of this application;
FIG. 17 is a schematic cross-sectional view of a partial structure of a battery cell according to some embodiments of this application;
FIG. 18 is a schematic exploded view of a battery cell according to some embodiments of this application; and
FIG. 19 is a schematic cross-sectional view of a partial structure of a battery cell according to some embodiments of this application.

List of reference numerals: 10-battery cell; 100-housing; 101-first through-hole; 110-bottom wall; 121-first sidewall; 122-second sidewall; 123-third sidewall; 124-fourth sidewall; 200-cover; 300-pressure relief mechanism; 310- adhesive film; 311-first adhesive layer; 312-second adhesive layer; 313-third adhesive layer; 320-first metal sheet; 330- adhesive film; 340- second metal sheet; 400-electrode post; 500-housing; 501-first through-hole; 502-second through-hole; 510-bottom wall; 520-first sidewall; 610-electrode post; 620-first insulator; 621-groove; 622-third through-hole; 630-interconnect component; 631-fourth through-hole; 640-second insulator; 641- fifth through-hole; 710-adhesive film; 720- adhesive film; 721-first adhesive segment; 722-second adhesive segment; 730- adhesive film; 731-first adhesive segment; 732-second adhesive segment; 733-third adhesive segment; 740-metal sheet; 20-shell.

### DETAILED DESCRIPTION OF EMBODIMENTS

To make the objectives, technical solutions, and advantages of this application clearer, the following gives a clear description of the technical solutions in some embodiments of this application with reference to the drawings in some embodiments of this application. Evidently, the described embodiments are merely a part rather than all of the embodiments of this application. All other embodiments derived by a person of ordinary skill in the art based on the embodiments of this application without making any creative efforts fall within the protection scope of this application.

Unless otherwise defined, all technical and scientific terms used herein have the same meanings as what is normally understood by a person skilled in the technical field of this application. The terms used in the specification of this application are merely intended to describe specific embodiments but not intended to limit this application. The terms "include" and "contain" and any variations thereof used in the specification, claims, and brief description of drawings of this application are intended as non-exclusive inclusion. The terms such as "first" and "second" used in the specification, claims, and brief description of drawings herein are intended to distinguish between different items, but are not intended to describe a specific sequence or order of precedence.

In the description of this application, unless otherwise expressly specified and defined, the terms "mount", "concatenate", "connect", and "attach" are understood in a broad sense. For example, a "connection" may be a fixed connection, a detachable connection, or an integrated connection; or may be a direct connection or an indirect connection implemented through an intermediary; or may be internal communication between two components. A person of ordinary skill in the art is able to understand the specific meanings of the terms in this application according to specific situations.

The term "and/or" in this application indicates merely a relation for describing the related items, and represents three possible relationships. For example, "A and/or B" may represent the following three circumstances: A alone, both A and B, and B alone. In addition, the character "/" herein generally indicates an "or" relationship between the item preceding the character and the item following the character.

In embodiments of this application, the same reference numeral denotes the same component. For brevity, detailed descriptions of the same component are omitted in a different embodiment. Understandably, dimensions such as thickness, length, and width of various components in the embodiments of this application shown in the drawings, and dimensions such as overall thickness, length, and width of an integrated device are merely illustrative descriptions, but do not constitute any limitation on this application.

In this application, each battery cell may be a secondary battery or a primary battery. For example, the battery cell may be a lithium-ion battery, a sodium-ion battery, a magnesium-ion battery, or the like. The type of the battery cell is not limited in an embodiment of this application. The battery cell may be in various shapes such as cylindrical, flat, cuboidal or other shapes. The shape of the battery cell is not limited in an embodiment of this application.

The electrode assembly may be of a jelly-roll type structure or a stacked type structure. The structure of the electrode assembly is not limited in an embodiment of this application.

The applicant hereof finds that, for a typical steel-shell battery cell, a notch is typically created by laser on a cover of the steel shell. When the internal gas pressure of the battery cell is overly high, the notch can rupture to form a pressure relief channel to expel the gas out of the battery cell, thereby playing an explosion-proof role and improving the safety of the battery cell. However, in order to expel the gas smoothly out of the battery cell after the notch is ruptured, a valve space usually needs to be reserved at a position corresponding to the notch on the electrical device. In addition, the cover is a lateral face with the largest area among the lateral faces of the shell of the battery cell, and the length of the notch is relatively large. Therefore, in order to reserve a space between the cover and other components, a relatively large space needs to be occupied in the electrical device. Moreover, the notch is mainly ruptured by air pressure inside the battery cell, and is of low thermal sensitivity, and the hot-box test pass rate is relatively low, thereby impairing the safety of the battery cell. In addition, the laser notching increases the manufacturing cost of the battery cell.

Based on the above considerations, in order to solve the problems of excessive space occupation, low safety of pressure relief of the battery cell, and high manufacturing cost caused by the pressure relief currently implemented by the notch for the battery cell, the applicant hereof has designed an battery cell through in-depth research. The battery cell includes a housing and a pressure relief mechanism. A first through-hole is created on the housing. The pressure relief mechanism covers the first through-hole. The pressure relief mechanism includes an adhesive film. The adhesive film is meltable by heat to form a pressure relief channel that connects the interior and exterior of the housing. The pressure relief mechanism is of high thermal sensitivity, achieves relatively high reliability of pressure relief, and improves the safety of the battery cell. In addition, compared to the pressure relief structure implemented by a notch, the first through-hole in this embodiment is of a smaller size, thereby avoiding the need to reserve a relatively large space, making the structure of the electrical device more compact, and reducing the manufacturing cost of the pressure relief mechanism.

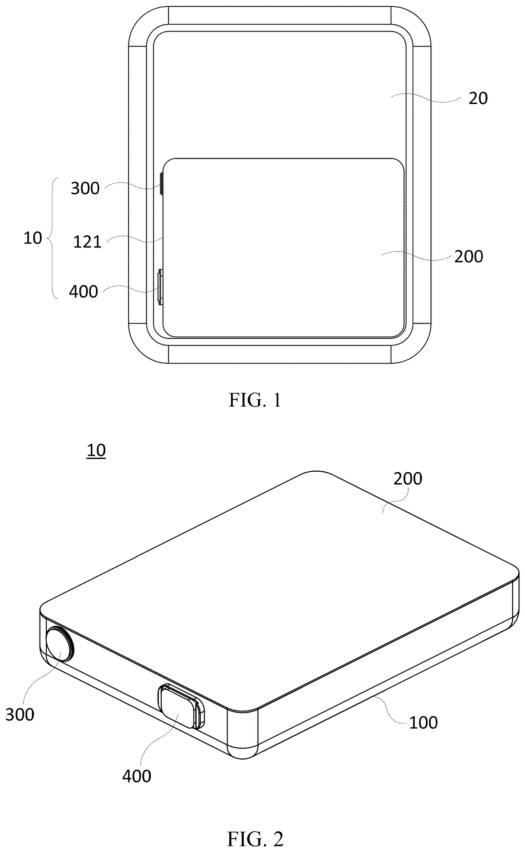

An embodiment of this application provides an electrical device powered by a battery cell. The electrical device may be, but without being limited to, a mobile phone, a tablet, a notebook computer, an electric toy, an electric tool, an electric power cart, an electric vehicle, a ship, a spacecraft, and the like. As an example, FIG. 1 is a schematic top view of a partial structure of an electrical device according to some embodiments of this application. In FIG. 1, the battery cell 10 is a rectangular structure, and is accommodated in a shell 20.

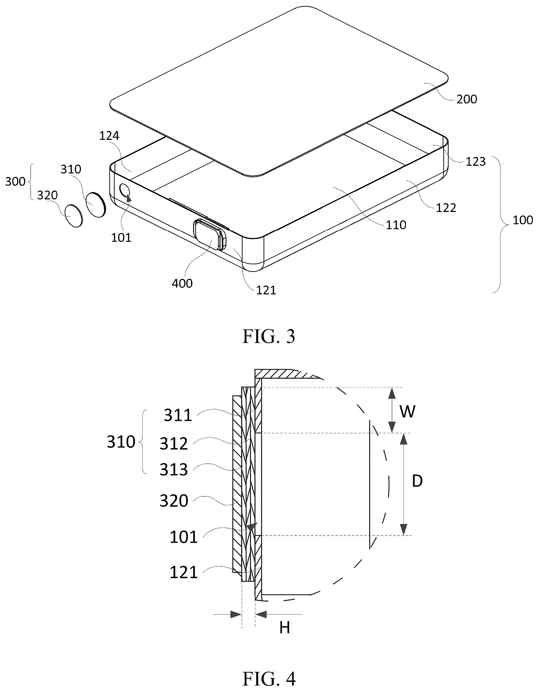

Referring to FIG. 2 and FIG. 3, FIG. 2 is a three-dimensional schematic structural diagram of a battery cell according to some embodiments of this application; and FIG. 3 is a schematic structural exploded view of a battery cell according to some embodiments of this application. The battery cell 10 includes a housing 100, a cover 200, an electrode assembly (not shown in the drawings), and an electrolyte solution (not shown in the drawings). The cover 200 is configured to fit on and cover the housing 100 to form an accommodation space. The accommodation space is configured to accommodate the electrode assembly and the electrolyte solution. The electrode assembly includes a positive electrode plate, a negative electrode plate, and a separator. The battery cell works primarily by shuttling metal ions between the positive electrode plate and the negative electrode plate.

According to some embodiments of this application, referring to FIG. 1 to FIG. 3, an embodiment of this application provides an battery cell 10. The battery cell 10 includes a housing 100 and a pressure relief mechanism 300. A first through-hole 101 is created on the housing 100. The pressure relief mechanism 300 covers the first through-hole 101. The pressure relief mechanism 300 includes an adhesive film 310. The adhesive film 310 is meltable by heat to form a pressure relief channel that connects the interior and exterior of the housing 100.

By covering the first through-hole 101 of the housing 100 with the pressure relief mechanism 300 containing the adhesive film 310, the adhesive film 310 is caused to be meltable by heat to form a pressure relief channel that connects the interior and exterior of the housing 100. The pressure relief mechanism 300 is of high thermal sensitivity, achieves relatively high reliability of pressure relief, and improves the safety of the battery cell 10. In addition, compared to the pressure relief structure implemented by a notch, the first through-hole 101 in this embodiment is of a smaller size, thereby avoiding the need to reserve a large space, and making the structure of the electrical device more compact. Moreover, the manufacturing process of the pressure relief mechanism 300 in this embodiment involves just the steps such as hole punching and adhesive melting, and is more cost-effective than laser notching.

In some embodiments, the first through-hole 101 may be an injection port. The electrolyte solution is injected into the battery cell 10 through the first through-hole 101.

Reuse of the injection port as the first through-hole 101 for pressure relief can further simplify the manufacturing process of the battery cell 10, save the step of hole punching, and reduce the manufacturing cost of the battery cell 10.

In some other embodiments, the first through-hole 101 may be another through-hole formed on the housing 100.

In some embodiments, the housing 100 includes a bottom wall 110 and a plurality of sidewalls disposed around the bottom wall 110. The plurality of sidewalls may include a first sidewall 121, a second sidewall 122, a third sidewall 123, and a fourth sidewall 124 that are connected to each other in sequence. The battery cell 10 may further include an electrode post 400. The electrode post 400 and the first through-hole 101 are disposed on the same sidewall (for example, the first sidewall 121).

When the battery cell 10 is mounted into the electrical device, a space needs to be reserved for electrical connection between the electrode post 400 and other components of the electrical device. In this way, the electrode assembly in the housing 100 can be electrically connected to other components. Therefore, by disposing the electrode post 400 and the first through-hole 101 on the same sidewall, it is not necessary to additionally reserve a space for the first through-hole 101 to implement pressure relief. In addition, the first sidewall 121 may be the smallest in area among the plurality of walls of the housing 100, and the spacing that needs to be reserved is smaller, thereby further saving the space of the electrical device, and making the structure of the electrical device more compact.

Referring to FIG. 4, FIG. 4 is a schematic cross-sectional view of a partial structure of a battery cell according to some embodiments of this application. In some embodiments, the adhesive film 310 is bonded to the housing 100. The width of the adhesive film 310 at a part bonded to the housing 100 is W, satisfying: 0.2 mm ≤ W ≤ 2 mm.

By bonding the adhesive film 310 to the housing 100, the adhesive film 310 can seal the first through-hole 101. In addition, the width W of the adhesive film 310 at the part bonded to the housing 100 is set to a value ranging from 0.2 mm to 2 mm, thereby shortening the pressure relief path when the battery cell 10 is thermally runaway, achieving a relatively high sensitivity of the battery cell 10 in pressure relief, and making the adhesive film 310 more reliable in sealing the first through-hole 101. If the value of W is relatively small (for example, less than 0.2 mm), the adhesive film 310 will be less reliable in sealing the first through-hole 101. If the value of W is relatively large (for example, larger than 2 mm), the pressure relief path will be longer, and the sensitivity of the battery cell in pressure relief will be lower.

Preferably, the width of the adhesive film satisfies: 0.3 mm ≤ W ≤ 1 mm, thereby further shortening the pressure relief path when the battery cell 10 is thermally runaway, and improving the sensitivity of the battery cell 10 in pressure relief.

In some embodiments, the pressure relief mechanism 300 may further include a first metal sheet 320. The first metal sheet 320 and the adhesive film 310 are stacked along the opening direction of the first through-hole 101 (that is, the thickness direction of the first sidewall 121). The first metal sheet 320 is disposed on a side of the adhesive film 310, the side being oriented back from the housing 100.

The adhesive film 310 is a polymer permeable to water. Water adversely affects the electrode assembly and the electrolyte solution after entering the housing 100 through the adhesive film 310. By disposing the first metal sheet 320 on a side of the adhesive film 310 that is oriented back from the housing 100, the water seepage area of the adhesive film 310 is reduced, and the sealing effect is improved.

In some embodiments, the adhesive film 310 may be made of polypropylene that is of high toughness and high chemical resistance.

In some embodiments, the first metal sheet 320 may be made of a material such as aluminum, nickel, and stainless steel, thereby being not prone to rust and achieving a long service life.

In some embodiments, the first metal sheet 320 may be in a circular shape, the adhesive film 310 may be in a circular shape, and the first through-hole 101 may be in a circular shape.

With the first metal sheet 320 being in a circular shape, it is not necessary to adjust the assembling direction, and it is convenient to assemble the first metal sheet 320 and the adhesive film 310. With the adhesive film 310 being in a circular circle, the adhesive film 310 can be assembled to the circular first through-hole 101 conveniently. In addition, when the circle center of the adhesive film 310 is collinear with the circle center of the first through-hole 101, the bonding surface of the adhesive film 310 to the housing 100 is distributed homogeneously, thereby improving the sealing effect and facilitating the mounting of the adhesive film 310.

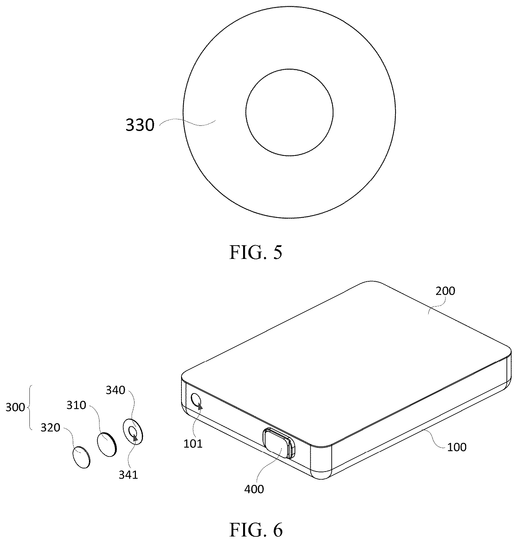

Referring to FIG. 5, FIG. 5 is a schematic structural front view of an adhesive film according to some embodiments of this application. In some embodiments, the first metal sheet 320 may be in a circular shape, and the adhesive film 330 may be in an annular shape.

With the adhesive film 330 being in an annular shape, a pressure relief channel can be formed between the adhesive film 330 and the housing 100, and between the adhesive film 330 and the first metal sheet 320, separately, thereby increasing the number of pressure relief channels and improving the pressure relief effect.

Still referring to FIG. 1 to FIG. 3, in some embodiments, the first through-hole 101 is in a circular shape, the diameter of the first metal sheet 320 is less than or equal to the outer diameter of the adhesive film 310, and the diameter of the first metal sheet 320 is greater than the diameter of the first through-hole 101.

By setting the diameter of the first metal sheet 320 to be less than or equal to the outer diameter of the adhesive film 310, it is more convenient to assemble the first metal sheet 320 to the adhesive film 310. By setting the diameter of the first metal sheet 320 to be greater than the diameter of the first through-hole 101, the first metal sheet 320 is enabled to sufficiently cover the first through-hole 101, thereby improving the sealing effect, and improving the effect of blocking moisture.

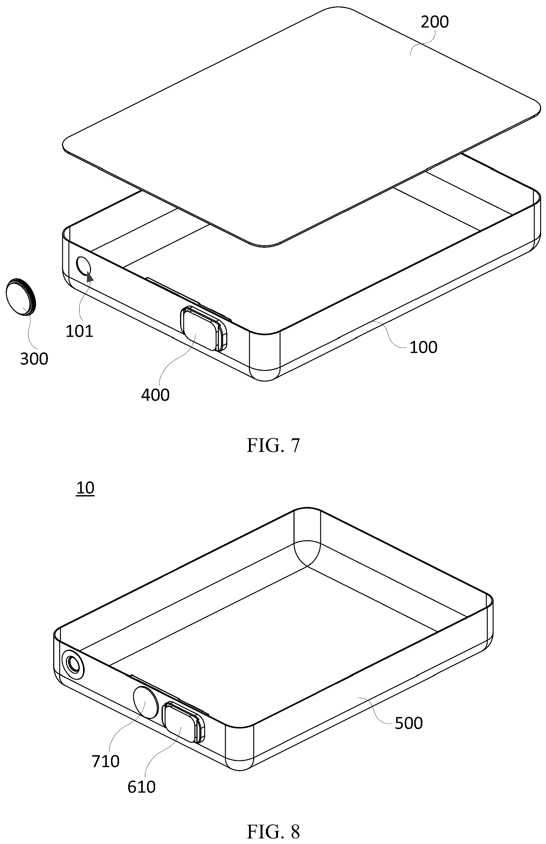

Referring to FIG. 6 and FIG. 7, FIG. 6 is a schematic structural exploded view of a battery cell according to some embodiments of this application; and FIG. 7 is a schematic structural exploded view of a battery cell according to some embodiments of this application. In some embodiments, the pressure relief mechanism 300 may further include a second metal sheet 340. The second metal sheet 340 is disposed between the adhesive film 310 and the housing 100. The second metal sheet 340 is welded to the housing 100. A second through-hole 341 is created in the second metal sheet 340.

Because the injection port is reused as the first through-hole 101, an electrolyte solution residue may exist at the injection port after the electrolyte solution is injected into the battery cell 10. The electrolyte solution affects the viscosity of the adhesive film 310, and results in weak bonding between the adhesive film 310 and the housing 100. By disposing and welding the second metal sheet 340 to the housing 100, the connection between the pressure relief mechanism 300 and the housing 100 is more stable, and the sealing effect is better.

In some embodiments, the adhesive film 310 may be bonded to the first metal sheet 320 and the second metal sheet 340 separately first to form a pressure relief mechanism 300, and then the pressure relief mechanism 300 is welded to the housing 100, thereby simplifying and facilitating the manufacturing process.

In some other embodiments, the first metal sheet 320, the adhesive film 310, and the second metal sheet 340 may be stacked first, and then a high temperature of welding melts the adhesive film 310 during welding between the second metal sheet 340 and the housing 100, so that the adhesive film 310 is bonded to the first metal sheet 320 and the second metal sheet 340 synchronously.

In some embodiments, the second metal sheet 340 is an annular shape.

With the second metal sheet 340 being in an annular shape, a pressure relief channel with a relatively large area can be formed within the second metal sheet 340, thereby improving the pressure relief effect.

Referring to FIG. 4, in some embodiments, the adhesive film 310 may include a first adhesive layer 311 and a second adhesive layer 312. The first adhesive layer 311 and the second adhesive layer 312 are stacked along the opening direction of the first through-hole 101. The second adhesive layer 312 is located on a side of the first adhesive layer 311, the side being oriented back from the housing 100. The melting point of the first adhesive layer 311 is lower than the melting point of the second adhesive layer 312.

By disposing the first adhesive layer 311 and the second adhesive layer 312 and making the melting point of the first adhesive layer 311 lower than the melting point of the second adhesive layer 312, the first adhesive layer 311 is meltable and bonded to the housing 100 when the adhesive film 310 is activated by a high temperature, but without melting the second adhesive layer 312 at the same time, thereby avoiding excessive melting of the adhesive film 310 that affects the mounting of the adhesive film 310, and decreasing the amount of adhesive overflow.

In some embodiments, the melting point of the first adhesive layer 311 may be T1, satisfying: 100 °C ≤ T1 ≤ 130 °C.

The melting point of the first adhesive layer 311 is set to a value ranging from 100 °C to 130 °C. Therefore, the first adhesive layer 311 can melt to form a pressure relief channel when the battery cell 10 is thermally runaway. If the value of T1 is relatively small (for example, less than 100 °C), the first adhesive layer 311 may melt before the battery cell 10 is thermally runaway, and the reliability of sealing the first through-hole 101 by the adhesive film 310 is relatively low. If the value of T1 is relatively large (for example, larger than 130 °C), the first adhesive layer 311 is hardly meltable when the battery cell 10 is thermally runaway, and the sensitivity of the battery cell 10 in pressure relief is relatively low.

Preferably, the melting point satisfies 110 °C ≤ T1 ≤ 125 °C, so that the control is more accurate in a case of thermal runaway of the battery cell 10.

In some embodiments, the melting point of the second adhesive layer 312 is T2, satisfying: 140 °C ≤ T2 ≤ 190 °C.

By setting the melting point of the second adhesive layer 312 to a value ranging from 140 °C to 190 °C, the first adhesive layer 311 is caused to be meltable without melting the second adhesive layer 312. If T2 is relatively small (for example, less than 140 °C), the first adhesive layer 311 and the second adhesive layer 312 may melt at the same time and mix together when the adhesive film 310 is activated by a high temperature, making it difficult to mount the adhesive film 310. If T2 is relatively large (for example, greater than 190 °C), the second adhesive layer 312 is still hardly meltable when the battery cell 10 is thermally runaway, and the sensitivity of the battery cell 10 in pressure relief is relatively low.

Preferably, the melting point satisfies 150 °C ≤ T2 ≤ 170 °C, so that the control is more accurate in a case of thermal runaway of the battery cell 10.

In some embodiments, the adhesive film 310 may further include a third adhesive layer 313. The third adhesive layer 313 is located between the second adhesive layer 312 and the first metal sheet 320. The melting point of the third adhesive layer 313 is less than the melting point of the second adhesive layer 312.

By disposing the third adhesive layer 313 and making the melting point of the third adhesive layer 313 lower than the melting point of the second adhesive layer 312, the third adhesive layer 313 is caused to be meltable and bonded to the first metal sheet 320 when the adhesive film 310 is activated by a high temperature, but without melting the second adhesive layer 312 at the same time, thereby avoiding excessive melting of the adhesive film 310 that affects the mounting of the first metal sheet 320, and decreasing the amount of adhesive overflow.

In some embodiments, the melting point of the third adhesive layer 313 is T3, satisfying: 100 °C ≤ T3 ≤ 130 °C.

The melting point of the third adhesive layer 313 is set to a value ranging from 100 °C to 130 °C. Therefore, the third adhesive layer 313 can melt to form a pressure relief channel to the first metal sheet 320 when the battery cell 10 is thermally runaway. If the value of T3 is relatively small (for example, less than 100 °C), the third adhesive layer 313 may melt before the battery cell 10 is thermally runaway, and the reliability of sealing the first through-hole 101 by the adhesive film 310 is relatively low. If the value of T3 is relatively large (for example, larger than 130 °C), the third adhesive layer 313 is hardly meltable when the battery cell 10 is thermally runaway, and the sensitivity of the battery cell 10 in pressure relief is relatively low.

Preferably, the melting point satisfies 110 °C ≤ T3 ≤ 125 °C, so that the control is more accurate in a case of thermal runaway of the battery cell 10.

In some embodiments, a thickness of the adhesive film 310 may be H, satisfying: 0.05 mm ≤ H < 1 mm.

The thickness of the adhesive film 310 is set to a value ranging from 0.05 mm to 1 mm, thereby making the adhesive film 310 not easily breakable and not easily permeable to water, and achieving a good effect of pressure relief. If the value of H is relatively small (for example, less than 0.05 mm, the adhesive film 310 is easily breakable and overly permeable to water. If the value of H is relatively large (for example, larger than 1 mm), the adhesive film 310 is hardly meltable when the battery cell 10 is thermally runaway, and the sensitivity of the battery cell 10 in pressure release is relatively low.

Preferably, the thickness satisfies 0.1 mm ≤ H ≤ 0.3 mm, thereby further making the adhesive film 310 not easily breakable and not highly permeable to water, achieving a good effect of pressure relief, and exercising more accurate control in a case of thermal runaway of the battery cell 10.

In some embodiments, a thickness ratio between the first adhesive layer 311, the second adhesive layer 312, and the third adhesive layer 313 may be 1: 0.5: 1 to 1: 3: 1.

By setting the thickness ratio between the first adhesive layer 311, the second adhesive layer 312, and the third adhesive layer 313 to a value ranging from 1: 0.5: 1 to 1: 3: 1, the second adhesive layer 312 exerts a good supporting effect but little impact on the pressure relief effect of the adhesive film 310. If the second adhesive layer 312 is relatively thin (for example, less than 0.5 times the thickness of the first adhesive layer 311), then the second adhesive layer 312 is unable to exert a good supporting effect, and it is not convenient for a bonding device (not shown in the drawings) to support the second adhesive layer 312 and avoid displacement of the adhesive film 310 during the melting of the first adhesive layer 311. In addition, the small thickness makes the second adhesive layer 312 prone to break and causes inconvenience to the mounting of the adhesive film 310. If the second adhesive layer 312 is relatively thick (for example, thicker than 3 times the thickness of the first adhesive layer), then the meltability of the first adhesive layer 311 may be reduced, and in turn, the sensitivity of the battery cell 10 in pressure relief may be impaired.

In some embodiments, the first through-hole 101 is in a circular shape, and the diameter of the first through-hole 101 is D, satisfying: 0.5 mm ≤ D ≤ 2 mm.

The diameter of the first through-hole 101 is set to a value ranging from 0.5 mm to 2 mm. In this way, when the battery cell 10 is thermally runaway, the first through-hole 101 can provide a pressure relief channel that possesses a relatively large cross-sectional area. In addition, such a setting makes it convenient to mount the pressure relief mechanism 300. A relatively small value of D (for example, less than 0.5 mm) leads to a relatively small cross-sectional area of the pressure relief channel formed by melting the adhesive film 310 when the battery cell 10 is thermally runaway, the gas inside the housing 100 may fail to be released in time, and the pressure relief safety of the battery cell 10 is relatively low. When the value of D is relatively large (for example, larger than 2 mm), the pressure relief mechanism 300 with a relatively large area is required to cover the first through-hole 101. The adhesive film 310 is a flexible material that provides a relatively weak supporting force, thereby making it difficult to mount the pressure relief mechanism 300.

Preferably, the diameter satisfies 0.9 mm ≤ D ≤ 1.6 mm, thereby further enabling the first through-hole 101 to provide a pressure relief channel that possesses a relatively large cross-sectional area when the battery cell is thermally runaway, and making it more convenient to mount the pressure relief mechanism 300.

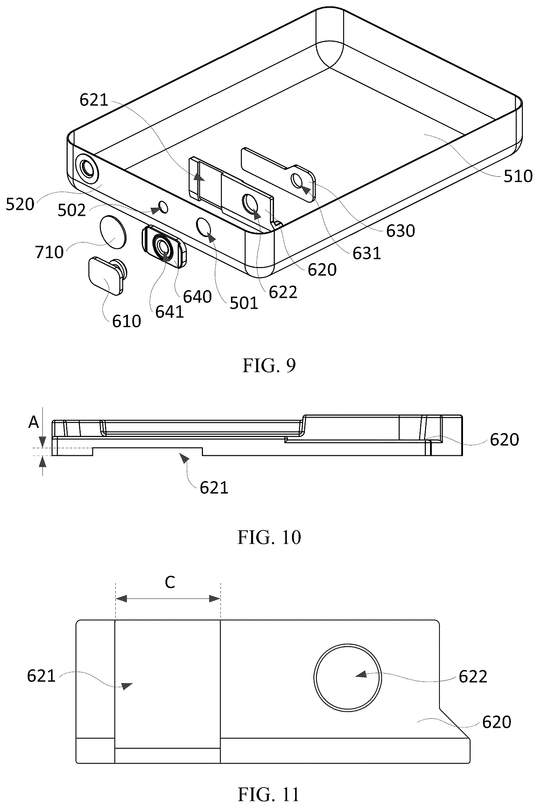

Referring to FIG. 8 and FIG. 9, FIG. 8 is a three-dimensional schematic structural diagram of a battery cell according to some embodiments of this application; and FIG. 9 is a schematic structural exploded view of a battery cell according to some embodiments of this application. The battery cell 10 includes a housing 500, an electrode post 610, and a pressure relief mechanism. The housing 500 includes a bottom wall 510 and a plurality of sidewalls disposed around the bottom wall 510. A first through-hole 501 and a second through-hole 502 are created on a first sidewall 520 of the plurality of sidewalls. The electrode post 610 is threaded through the first through-hole 501. The pressure relief mechanism covers the second through-hole 502. The pressure relief mechanism includes an adhesive film 710. The adhesive film 710 is able to melt when a temperature of the battery cell 10 reaches a threshold, so as to release pressure inside the housing 100 through the second through-hole 502.

The pressure relief mechanism containing an adhesive film 710 is disposed and covers the second through-hole 502 of the housing 500. In this way, the adhesive film 710 can melt when the temperature of the battery cell 10 reaches a threshold, so that the pressure in the housing 500 is released through the second through-hole 502. The thermal sensitivity of the pressure relief mechanism is relatively high, thereby achieving relatively high reliability of pressure relief and improving safety of the battery cell 10. Both the second through-hole 502 and the first through-hole 501 in which the electrode post 610 is mounted are located on the first sidewall 520, so that the pressure relief mechanism can reuse the space reserved for the electrode post 610. This saves the space of the electrical device equipped with the battery cell 10, makes the structure of the electrical device more compact, and reduces the manufacturing cost of the pressure relief mechanism.

In some embodiments, the battery cell 10 may further include a first insulator 620. The first insulator 620 is located inside the first sidewall 520. The first insulator 620 is connected to the electrode post 610. A channel connecting an inner space of the housing 500 and the pressure relief mechanism is created on the first insulator 620.

The channel connecting the internal space of the housing 500 and the pressure relief mechanism is created on the first insulator 620, so that the second through-hole 502 is not prone to be jammed during pressure relief, and the pressure relief of the battery cell is more effective and safer.

In some embodiments, the channel is a groove 621 created on a side of the first insulator 620, the side being oriented toward the first sidewall 520. At least one end of the groove 621 extends to an edge of the first insulator 620.

The channel is a groove 621 created on a side of the first insulator 620, the side being oriented toward the first sidewall 520. In this way, the distance between the second through-hole 502 and the channel is shorter, thereby further reducing the possibility of jamming the channel, and making the pressure relief of the battery cell more effective and safer.

In some embodiments, the channel runs through the first insulator 620 along a width direction of the first insulator 620.

The air on both sides of the first insulator 620 along the width direction of the first insulator 620 is enabled to flow to the second through-hole 502 through the channel. The flow rate of the air during the pressure relief is faster, and the pressure relief can still be implemented when the channel is jammed on any side of the first insulator 620 along the width direction of the first insulator 620, thereby improving the reliability of the pressure relief of the battery cell 10.

Referring to FIG. 10, FIG. 10 is a schematic structural top view of a first insulator according to some embodiments of this application. In some embodiments, the depth of the channel along the opening direction (that is, the thickness direction of the first sidewall 520) of the second through-hole 502 is A, satisfying: 0.05 mm ≤ A ≤ 0.5 mm.

The depth A of the channel along the opening direction of the second through-hole 502 is set to a value ranging from 0.05 mm to 0.5 mm, thereby increasing the cross-sectional area of the channel without causing the first insulator 620 to occupy too much space inside the housing 500, and in turn, increasing the speed of pressure relief. If the value of A is relatively small (for example, less than 0.05 mm), the cross-sectional area of the channel is relatively small, the channel is prone to be jammed, and the speed of pressure relief is overly low and impairs the safety of pressure relief. If the value of A is relatively large (for example, larger than 0.5 mm), the first insulator 620 will be oversized and occupy much space inside the housing 500, thereby reducing the space available for mounting other components in the housing 500.

Preferably, the depth A satisfies 0.1 mm ≤ A ≤ 0.2 mm, thereby further increasing the cross-sectional area of the channel without occupying too much space inside the housing 500.

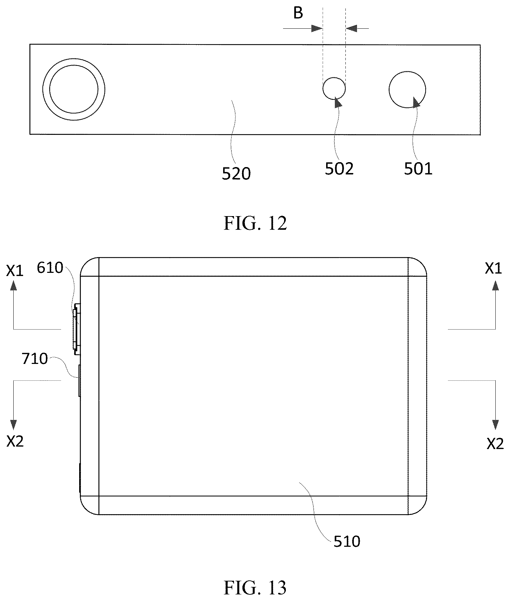

Referring to FIG. 11 and FIG. 12, FIG. 11 is a schematic structural front view of a first insulator according to some embodiments of this application; and FIG. 12 is a schematic structural front view of a battery cell according to some embodiments of this application. In some embodiments, the diameter of the second through-hole 502 along the direction of spacing between the first through-hole 501 and the second through-hole 502 is B, and the width of the channel along the direction of spacing between the first through-hole 501 and the second through-hole 502 is C, satisfying: 0.8 × B ≤ C.

C is set to a value greater than or equal to 0.8×B, thereby achieving a relatively large passage area between the channel and the second through-hole 502, and increasing the pressure relief speed. If C is relatively small (for example, less than 0.8×B), the passage area between the channel and the second through-hole 502 is relatively small, the channel is prone to jamming, and the speed of pressure relief is overly low, thereby impairing the safety of pressure relief.

Preferably, the width satisfies B ≤ C ≤ 2×B, thereby further achieving a relatively large passage area between the channel and the second through-hole 502.

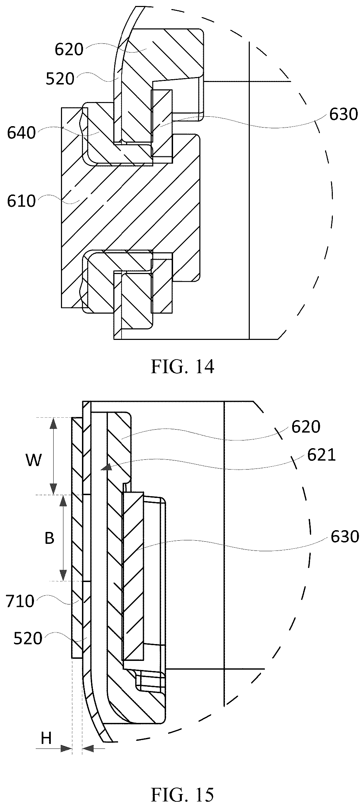

Referring to FIG. 9 and FIG. 13 to FIG. 15, FIG. 13 is a schematic structural bottom view of a battery cell according to some embodiments of this application; FIG. 14 is a schematic structural cross-sectional view of FIG. 13 sectioned along an X1-X1 line; and FIG. 15 is a schematic structural cross-sectional view of FIG. 13 sectioned along an X2-X2 line. In some embodiments, the battery cell 10 further includes an electrode assembly (not shown in the drawings) and an interconnect component 630. Both the electrode assembly and the interconnect component 630 are disposed in the housing 500. The interconnect component 630 is configured to be electrically connected to the electrode assembly and the electrode post 610. The first insulator 620 is located between the first sidewall 520 and the interconnect component 630. A third through-hole 622 is created in the first insulator 620, and a fourth through-hole 631 is created in the interconnect component 630. The electrode post 610 is threaded through the third through-hole 622 and the fourth through-hole 631 and riveted to the interconnect component 630.

By letting the electrode post 610 be threaded through the first insulator 620 and the interconnect component 630 and riveted to the interconnect component 630, the connection between the electrode post 610 and the interconnect component 630 is made more stable. In addition, the first insulator 620 is able to play a role of dielectrically isolating the interconnect component 630 from the housing 500.

In some embodiments, the battery cell 10 may further include a second insulator 640. At least a part of the second insulator 640 is located outside the first sidewall 520. A fifth through-hole 641 is created in the second insulator 640. The electrode post 610 is threaded through the fifth through-hole 641.

The electrode post 610 is threaded through the second insulator 640, so that the second insulator 640 can play a role of dielectrically isolating the electrode post 610 from the housing 500.

In some embodiments, a melting point of the adhesive film 710 is T, satisfying: 100 °C ≤ T ≤ 190 °C.

The melting point T of the adhesive film 710 is set to a value ranging from 100 °C to 190 °C. Therefore, the adhesive film 710 can melt to release the pressure inside the housing 500 when the battery cell 10 is thermally runaway. If the value of T is relatively small (for example, less than 100 °C), the adhesive film 710 may melt before the battery cell 10 is thermally runaway, and the reliability of sealing the second through-hole 502 by the adhesive film 710 is relatively low. If the value of T is relatively large (for example, larger than 190 °C), the adhesive film 710 is hardly meltable when the battery cell is thermally runaway, and the sensitivity of the battery cell 10 in pressure relief is relatively low.

Preferably, the melting point satisfies 100 °C ≤ T ≤ 130 °C, so that the control is more accurate in a case of thermal runaway of the battery cell 10.

In some embodiments, a thickness of the adhesive film 710 is H, satisfying: 0.05 mm ≤ H ≤ 0.5 mm.

The thickness H of the adhesive film 710 is set to a value ranging from 0.05 mm to 0.5 mm, thereby making the adhesive film 710 not easily breakable and not easily permeable to water, and achieving a good effect of pressure relief. If the value of H is relatively small (for example, less than 0.05 mm, the adhesive film 710 is easily breakable and overly permeable to water. If the value of H is relatively large (for example, larger than 0.5 mm), the adhesive film 710 is hardly meltable when the battery cell 10 is thermally runaway, and the sensitivity of the battery cell 10 in pressure release is relatively low.

Preferably, the thickness satisfies 0.1 mm ≤ H ≤ 0.3 mm, so that the control is more accurate in a case of thermal runaway of the battery cell 10.

In some embodiments, the second through-hole 502 may be in a circular shape, and a diameter of the second through-hole 502 is B, satisfying: 0.5 mm ≤ B ≤ 3 mm.

The diameter B of the second through-hole 502 is set to a value ranging from 0.5 mm to 3 mm. In this way, when the battery cell 10 is thermally runaway, the second through-hole 502 can provide a pressure relief channel that possesses a relatively large cross-sectional area. In addition, such a setting makes it convenient to mount the pressure relief mechanism. A relatively small value of B (for example, less than 0.5 mm) leads to a relatively small cross-sectional area of the pressure relief channel formed by melting the adhesive film 710 when the battery cell 10 is thermally runaway, the gas inside the housing 500 may fail to be released in time, and the pressure relief safety of the battery cell 10 is relatively low. When the value of B is relatively large (for example, larger than 3 mm), the pressure relief mechanism with a relatively large area is required to cover the second through-hole 502. The adhesive film 710 is a flexible material that provides a relatively weak supporting force, thereby making it difficult to mount the pressure relief mechanism.

Preferably, the diameter satisfies 0.9 mm ≤ B ≤ 1.6 mm, thereby further providing a pressure relief channel that possesses a relatively large cross-sectional area, and making it more convenient to mount the pressure relief mechanism.

In some embodiments, a width of the pressure relief mechanism at a part bonded to the first sidewall 520 is W, satisfying: 0.2 mm ≤ W ≤ 2 mm.

The width W of the adhesive film 710 at the part bonded to the first sidewall 520 is set to a value ranging from 0.2 mm to 2 mm, thereby shortening a pressure relief path when the battery cell 10 is thermally runaway, achieving a relatively high sensitivity of the battery cell 10 in pressure relief, and making the adhesive film 710 more reliable in sealing the second through-hole 502. If the value of W is relatively small (for example, less than 0.2 mm), the adhesive film 710 will be less reliable in sealing the second through-hole 502. If the value of W is relatively large (for example, larger than 2 mm), the pressure relief path will be longer, and the sensitivity of the battery cell 10 in pressure relief will be lower.

Preferably, the width of the adhesive film satisfies: 0.3 mm ≤ W ≤ 1 mm, thereby further shortening the pressure relief path when the battery cell 10 is thermally runaway, and improving the sensitivity of the battery cell 10 in pressure relief.

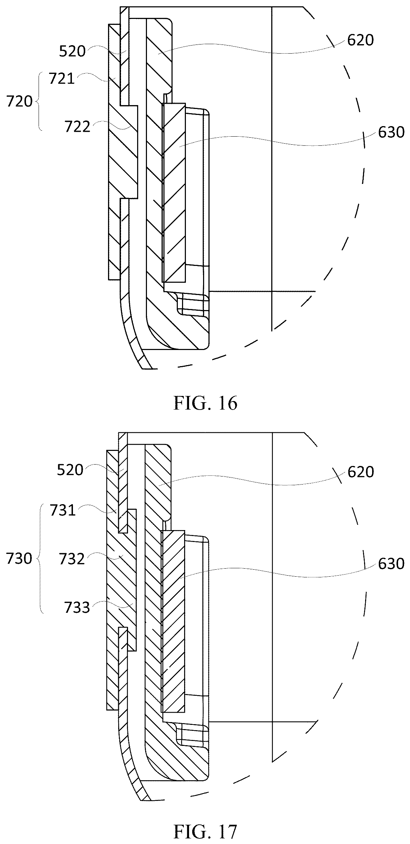

Referring to FIG. 16, FIG. 16 is a schematic cross-sectional view of a partial structure of a battery cell according to some embodiments of this application. In some embodiments, the adhesive film 720 may include a first adhesive segment 721 and a second adhesive segment 722 connected to each other. The first adhesive segment 721 is located outside the first sidewall 520. At least a part of the second adhesive segment 722 is located in the second through-hole 502.

The adhesive film 720 is divided into a first adhesive segment 721 and a second adhesive segment 722. At least a part of the second adhesive segment 722 is located in the second through-hole 502. In this way, the first adhesive segment 721 can be bonded to the housing 500, and the second adhesive segment 722 can seal off the second through-hole 502, thereby improving the effect of sealing the second through-hole 502.

Referring to FIG. 17, FIG. 17 is a schematic cross-sectional view of a partial structure of a battery cell according to some embodiments of this application. In some embodiments, the adhesive film 730 includes a first adhesive segment 731, a second adhesive segment 732, and a third adhesive segment 733 connected to each other in sequence. The first adhesive segment 731 is located outside the first sidewall 520, the second adhesive segment 732 is located in the second through-hole 502, and the third adhesive segment 733 is located inside the first sidewall 520.

The adhesive film 730 is divided into three adhesive segments, and the third adhesive segment 733 is located inside the first sidewall 520, thereby fixing the adhesive film 730 to the housing 500 more firmly, and improving the reliability of sealing the second through-hole 502.

In some embodiments, the dimension of the third adhesive segment 733 along the thickness direction of the bottom wall 510 is larger than the dimension of the second adhesive segment 732 along the thickness direction of the bottom wall 510, thereby further making the adhesive film 730 not easily detachable, and improving the reliability of sealing the second through-hole 502.

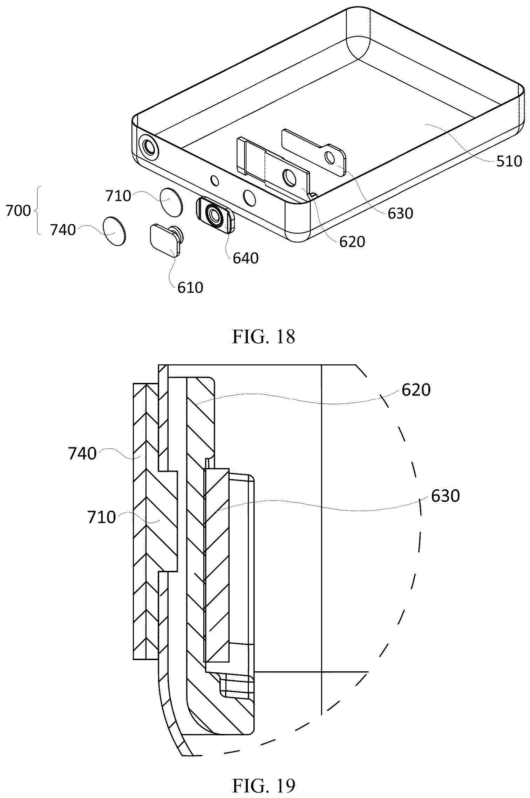

Referring to FIG. 18 and FIG. 19, FIG. 18 is a schematic exploded view of a battery cell according to some embodiments of this application; and FIG. 19 is a schematic cross-sectional view of a partial structure of a battery cell according to some embodiments of this application. In some embodiments, the pressure relief mechanism 700 includes an adhesive film 710 and a metal sheet 740 that are stacked along the opening direction of the second through-hole 502. The metal sheet 740 is disposed on a side of the adhesive film 710, the side being oriented back from the housing 500.

The adhesive film 710 is permeable to water. Water adversely affects the electrode assembly and the electrolyte solution after entering the housing 500 through the adhesive film 710. By disposing the first metal sheet 740 on a side of the adhesive film 710 that is oriented back from the housing 500, the water seepage area of the adhesive film 710 is reduced, and the sealing effect is improved.

Referring to FIG. 1, according to some embodiments of this application, this application further provides an electrical device. The electrical device includes the battery cell 10 disclosed in any one of the foregoing technical solutions. The battery cell 10 is configured to provide electrical energy for the electrical device.

The electrical device may be any one of the foregoing apparatuses or devices in which the battery cell 10 is applied.

It is hereby noted that to the extent that no conflict occurs, the embodiments of this application and the features in the embodiments may be combined with each other.

What is described above is merely exemplary embodiments of this application, but is not intended to limit this application. To a person skilled in the art, various modifications and variations may be made to this application. Any and all modifications, equivalent replacements, improvements, and the like made without departing from the spirit and principles of this application still fall within the protection scope of this application.

## Claims

1. A battery cell, **characterized in that** the battery cell comprises:
a housing, comprising a bottom wall and a plurality of sidewalls disposed around the bottom wall, wherein a first through-hole and a second through-hole are created on a first sidewall of the plurality of sidewalls;
an electrode post, threaded through the first through-hole; and
a pressure relief mechanism, covering the second through-hole, wherein
the pressure relief mechanism comprises an adhesive film, and the adhesive film is able to melt when a temperature of the battery cell reaches a threshold, so as to release pressure inside the housing through the second through-hole.

2. The battery cell according to claim 1, **characterized in that**, the battery cell further comprises a first insulator, the first insulator is located inside the first sidewall, the first insulator is connected to the electrode post, and a channel connecting an inner space of the housing and the pressure relief mechanism is created on the first insulator.

3. The battery cell according to claim 2, **characterized in that** the channel is a groove created on a side of the first insulator, the side being oriented toward the first sidewall, and at least one end of the groove extending to an edge of the first insulator.

4. The battery cell according to claim 3, **characterized in that** the groove runs through the first insulator along a width direction of the first insulator.

5. The battery cell according to claim 3, **characterized in that** a depth of the groove is A, satisfying: 0.05 mm ≤ A ≤ 0.5 mm.

6. The battery cell according to claim 5, **characterized in that** the depth satisfies: 0.1 mm ≤ A ≤ 0.2 mm.

7. The battery cell according to claim 3, **characterized in that** a diameter of the second through-hole is B, and a width of the groove is C, satisfying: 0.8 × B ≤ C.

8. The battery cell according to claim 7, **characterized in that** B ≤ C ≤ 2 × B.

9. The battery cell according to claim 2, **characterized in that** the battery cell further comprises an electrode assembly and an interconnect component, both the electrode assembly and the interconnect component are disposed in the housing, the interconnect component is configured to electrically connect the electrode assembly and the electrode post, and the first insulator is located between the first sidewall and the interconnect component; and
a third through-hole is created in the first insulator, a fourth through-hole is created in the interconnect component, and the electrode post is threaded through the third through-hole and the fourth through-hole and riveted to the interconnect component.

10. The battery cell according to claim 9, **characterized in that** the battery cell further comprises a second insulator, at least a part of the second insulator is located outside the first sidewall, a fifth through-hole is created in the second insulator, and the electrode post is threaded through the fifth through-hole.

11. The battery cell according to claim 1, **characterized in that** the adhesive film comprises a first adhesive segment and a second adhesive segment connected to each other, the first adhesive segment is located outside the first sidewall, and at least a part of the second adhesive segment is located in the second through-hole.

12. The battery cell according to claim 11, **characterized in that** the adhesive film further comprises a third adhesive segment connected to the second adhesive segment at a side away from the first adhesive segment, and the third adhesive segment is located inside the first sidewall.

13. The battery cell according to claim 1, **characterized in that** a melting point of the adhesive film is T, satisfying: 100 °C ≤ T ≤ 190 °C.

14. The battery cell according to claim 13, **characterized in that** the melting point satisfies: 100 °C ≤ T ≤ 130 °C.

15. The battery cell according to claim 1, **characterized in that** a thickness of the adhesive film is H, satisfying: 0.05 mm ≤ H ≤ 0.5 mm.

16. The battery cell according to claim 15, **characterized in that** the thickness satisfies: 0.1 mm ≤ H ≤ 0.3 mm.

17. The battery cell according to claim 1, **characterized in that** the second through-hole is in a circular shape, and a diameter of the second through-hole is B, satisfying: 0.5 mm ≤ B ≤ 3 mm.

18. The battery cell according to claim 17, **characterized in that** the diameter satisfies: 0.9 mm ≤ B ≤ 1.6 mm.

19. The battery cell according to claim 1, **characterized in that** a width of the adhesive film at a part bonded to the first sidewall is W, satisfying: 0.2 mm ≤ W ≤ 2 mm.

20. The battery cell according to claim 19, **characterized in that** the width satisfies: 0.3 mm ≤ W ≤ 1 mm.

21. The battery cell according to claim 1, **characterized in that** the pressure relief mechanism further comprises a metal sheet, the metal sheet and the adhesive film are stacked, and the metal sheet is located on a side of the adhesive film, the side being oriented back from the first sidewall.

22. A pressure relief mechanism, **characterized in that** the pressure relief mechanism comprises:
an adhesive film; and
a first metal sheet, disposed on one side of the adhesive film and bonded to the adhesive film, wherein
the pressure relief mechanism is configured to release pressure of a battery cell.

23. The pressure relief mechanism according to claim 22, **characterized in that** the pressure relief mechanism further comprises a second metal sheet, and the second metal sheet is disposed on a side of the adhesive film, the side being oriented back from the first metal sheet.

24. The pressure relief mechanism according to claim 23, **characterized in that** a melting point of the adhesive film is 100 °C to 130 °C.

25. The pressure relief mechanism according to claim 24, **characterized in that** the adhesive film comprises a first adhesive layer and a second adhesive layer, the first adhesive layer and the second adhesive layer are stacked, and the second adhesive layer is located on a side of the first adhesive layer, the side being oriented back from a housing, and a melting point of the first adhesive layer is lower than a melting point of the second adhesive layer.

26. The pressure relief mechanism according to claim 25, **characterized in that** the adhesive film further comprises a third adhesive layer, the third adhesive layer is located between the second adhesive layer and the first metal sheet, and a melting point of the third adhesive layer is lower than the melting point of the second adhesive layer.

27. The pressure relief mechanism according to claim 26, **characterized in that** the first adhesive layer, the second adhesive layer, and the third adhesive layer satisfy at least one of the following conditions:
(1) the melting point of the first adhesive layer is T1, satisfying: 100 °C ≤ T1 ≤ 130 °C;
(2) the melting point of the second adhesive layer is T2, satisfying: 140 °C ≤ T2 ≤ 190 °C; and
(3) the melting point of the third adhesive layer is T3, satisfying: 100 °C ≤ T3 ≤ 130 °C.

28. An electrical device, **characterized in that** the electrical device comprises the battery cell according to any one of claims 1 to 21, and the battery cell is configured to provide electrical energy.
